# EUROPÄISCHE PATENTSCHRIFT

(11) **EP 2 419 354 B1**
(45) Veröffentlichungstag und Bekanntmachung des Hinweises auf die Patenterteilung: **08.05.2013**
(21) Anmeldenummer: 10713122.9
(22) Anmeldetag: 20.03.2010
(51) Int. Cl.: B65G 49/04

(54) **ANLAGE ZUR TAUCHBEHANDLUNG**
DIP COATING LINE
INSTALLATION DE TRAITEMENT PAR IMMERSION

(30) Priorität: 15.04.2009 DE 102009017151
(43) Veröffentlichungstag der Anmeldung: 22.02.2012
(73) Patentinhaber: Eisenmann AG, 71032 Böblingen (DE)
(72) Erfinder: RÖCKLE, Jürgen, D-71106 Magstadt (DE)
(74) Vertreter: Ostertag, Ulrich
(86) Internationale Anmeldenummer: PCT/EP2010/001756
(87) Internationale Veröffentlichungsnummer: WO 2010/121688

(56) Entgegenhaltungen:
- DE-A1- 10 103 837
- DE-U1- 8 535 671

## Beschreibung

Die Erfindung betrifft eine Anlage zur Tauchbehandlung, insbesondere Tauchlackierung, von Gegenständen, insbesondere von Fahrzeugkarosserien, mit
a) mindestens einem Tauchbecken, das bis zu einem bestimmten Spiegel mit Behandlungsflüssigkeit füllbar ist;
b) einem Fördersystem, mit dessen Hilfe die zu behandelnden Gegenstände an das Tauchbecken heran, in dieses hinein, aus diesem heraus und von diesem weg beförderbar sind und eine Führungseinrichtung sowie mindestens einen entlang der Führungseinrichtung verfahrbaren Transportwagen aufweist, der seinerseits umfasst:
   ba) einen Antriebsmotor für die Verfahrbewegung entlang der Führungseinrichtung;
   bb) ein Halterungsgestell, an dem mindestens ein Gegenstand befestigbar ist;
   bc) eine mindestens eine Dreh- oder Schwenkachse aufweisende Eintaucheinrichtung, an welcher das Halterungsgestell befestigt ist;
c) eine Steuerungseinrichtung, in welcher eine Soll-Eintauchkurve für den am Halterungsgestell befestigten Gegenstand eingespeichert ist und welche die Bewegung des am Halterungsgestell befestigten Gegenstandes steuert:

Ältere Anlagen zur Tauchlackierung von Fahrzeugkarosserien verwendeten als Fördersystem einen Pendelförderer. Bei diesem wurde jede Fahrzeugkarosserie von zwei Pendelgehängen an einem die unteren Enden der Pendelgehänge miteinander verbindenden Skid getragen. Die Pendelgehänge ihrerseits waren oben an einer Förderkette befestigt, deren Höhenverlauf jeweils die örtliche Vertikalposition der transportierten Fahrzeugkarosserie bestimmte. Bei diesen zum Teil auch heute noch gebräuchlichen Anlagen bestand auf Grund der geschilderten Konstruktion keine Gefahr, dass die transportierte Fahrzeugkarosserie an einer harten, ihrem Bewegungsweg benachbarter Struktur, insbesondere einer Wand des Tauchbeckens oder zwischen zwei Tauchbecken angebrachten Behandlungseinrichtungen, z.B. Sprühkränzen, anstieß. Besondere Sicherungsmaßnahmen hierfür waren nicht erforderlich.

Ähnliches gilt für die in der DE 196 41 048 A1 beschriebene Tauchbehandlungsanlage, bei welcher jeweils eine Fahrzeugkarosserie tragende Drehgestelle mit Hilfe von Ketten entlang eines Schienensystemes gezogen und mit Hilfe einer Art mechanischer Kulissenführung zwangsweise in das Tauchbecken eingedreht und aus diesem wieder ausgedreht werden. Auch hier ist eine Kollision der behandelten Fahrzeugkarosserie mit einer dem Bewegungsweg benachbarten Hartstruktur nur in Ausnahmefällen denkbar, in denen eine der mechanischen Führungseinrichtungen versagt.

Da sowohl die mit einem Pendelförderer arbeitenden Tauchbehandlungsanlagen als auch diejenige, die in der DE 196 41 048 A1 beschrieben ist, verhältnismäßig wenig flexibel sind, haben in jüngster Zeit Tauchbehandlungsanlagen der eingangs genannten Art zunehmend an Bedeutung gewonnen, wie sie beispielsweise in der DE 101 03 837 B4 oder auch der DE 100 29 939 C1 beschrieben sind. Diese Tauchbehandlungsanlagen haben gemeinsam, dass sie von unabhängig verfahrbaren, mit eigenen Antriebsmotoren versehenen Transportwagen Gebrauch machen, welche den von ihnen getragenen Gegenstand mit Hilfe einer Eintaucheinrichtung in das Tauchbecken ein- und aus diesem austauchen. Die Eintauchbewegung umfasst dabei mindestens eine Dreh- oder Schwenkbewegung um mindestens eine Dreh-oder Schwenkachse. Die Linearbewegung des Transportwagens entlang der entsprechenden Führungseinrichtung sowie die Eintauchbewegung sind unabhängig von den entsprechenden Bewegungen anderer Transportwagen in der Anlage steuerbar. Auf diese Weise ergibt sich eine Flexibilität des Gesamtsystemes, die bei den älteren, insbesondere Transportketten verwendenden Anlagen nicht erreichbar war.

Die geringere Anzahl mechanischer Zwangsführungen, denen die selbständig verfahrbaren Transportwagen unterliegen, erhöht aber die Gefahr, dass bei bestimmten Systemfehlern, insbesondere auch Bedienungs- und Softwarefehlern, der zu behandelnde Gegenstand mit einer harten, dem Bewegungsweg benachbarten Struktur, insbesondere einer Wand des Tauchbeckens, kollidiert.

Aufgabe der vorliegenden Erfindung ist es, eine Anlage der eingangs genannten Art so auszugestalten, dass die Gefahr einer Kollision des zu behandelnden Gegenstandes mit einer harten, am Bewegungsweg liegenden Struktur weitestgehend ausgeschlossen ist.

Diese Aufgabe wird erfindungsgemäß dadurch gelöst, dass
d) ein Kollisions-Vermeidungssystem vorgesehen ist, welches umfasst:
   da) für jeden möglichen Freiheitsgrad der Bewegung des am Halterungsgestell befestigten Gegenstandes einen den Absolutmesswert messenden Positions-Messwertgeber;
   db) einen Speicher, in dem der Verlauf einer ersten Grenzfläche oder einer Grenzlinie gespeichert ist, welche den Verlauf der harten Strukturen entlang des Bewegungsweges des Gegenstandes wiedergibt;
   db) einen Speicher, in dem der Verlauf einer zweiten Grenzfläche oder Grenzlinie gespeichert ist, die in Abstand von der ersten Grenzfläche oder Grenzlinie verläuft, wobei zwischen der ersten Grenzfläche oder Grenzlinie und der zweiten Grenzfläche oder Grenzlinie ein Kollisionsschutzbereich gebildet ist;
   dc) einen Speicher, in welchem der Verlauf einer Kontur gespeichert ist, welche den Verlauf der Kontur des an dem Halterungsgestell befestigten Gegenstandes repräsentiert;
   wobei
e) die Steuerungseinrichtung aus den ihr von den Positions-Messwertgebern gelieferten Signalen und aus den gespeicherten Daten über den Verlauf der zweiten Grenzfläche oder Grenzlinie sowie über die den am Halterungsgestell befestigten Gegenstand repräsentierende Kontur kontinuierlich oder in bestimmten Zeitabständen errechnet, ob die Kontur in den Kollisionsschutzbereich eindringt oder nicht und im ersten Falle die weitere Bewegung des Gegenstandes anhält.

Erfindungsgemäß wird also die harte, am Bewegungsweg der Gegenstände liegende Struktur, repräsentiert durch eine diese Kontur zumindest annähernde Grenzfläche oder Grenzlinie, von einem Kollisionsschutzbereich umgeben, dessen nicht physisch vorhandene Grenzfläche oder Grenzlinie von einer Kontur nicht geschnitten werden darf, welche den Verlauf der Kontur des an dem Halterungsgestell befestigten Gegenstandes repräsentiert. Unter "repräsentieren" wird hier zumindest eine Annäherung an die exakte Geometrie verstanden, die beispielsweise nach Art eines Polygonzuges ausgeführt sein kann. Dringt die fragliche Kontur in den Kollisionsschutzbereich ein, wird sofort die weitere Bewegung des Gegenstandes gestoppt und gegebenenfalls Alarm gegeben. Auf diese Weise kann eine drohende Kollision sicher vermieden werden.

Im allgemeinen ist der Transportwagen in seitlicher Richtung so gut geführt, dass in dieser Richtung keine besonderen Massnahmen zur Kollisonsvermeidung getroffen werden müssen. Es genügt dann eine zweidimensionale Betrachtung in einer vertikalen, die Transportrichtung enthaltenden Ebene, z.B. in der vertikalen Mittelebene des zu behandelnden Gegenstands. Dies erleichtert die Speicherung der relevanten Geometrien und reduziert den rechnerischen Aufwand bei der Kollisionsüberprüfung.

Zweckmäßig ist, wenn die Steuerungseinrichtung von dem Transportwagen mitgeführt wird. Auf diese Weise werden Zeitverzögerungen, die mit der Informationsübertragung verbunden sind, reduziert.

Vorteilhafterweise ist eine Verifikationseinrichtung vorgesehen, welche die korrekte Funktion der Positions-Messwertgeber verifiziert. Aufgrund der hohen Schäden, die bei einer Kollision des zu behandelnden Gegenstandes mit einer harten Struktur entstehen können, ist es unerlässlich, dass das Kollisionsvermeidungssystem zuverlässig arbeitet, insbesondere, dass die Positions-Messwertgeber, auf denen das System beruht, korrekt arbeiten. Dies soll die erfindungsgemäße Verifikationseinrichtung sicherstellen.

Die Verifikationseinrichtung kann für mindestens einen Teil der Positions-Messwertgeber einen redundanten ähnlichen Positions-Messwertgeber umfassen. So lange beide einander zugeordnete Positions-Messwertgeber im Wesentlichen innerhalb eines Toleranzfensters denselben Wert anzeigen, kann von einem korrekten Funktionieren der Positions-Messwertgeber ausgegangen werden. Differieren die beiden Ausgangssignale jedoch stark, muss das Vorliegen eines Fehlers angenommen werden und die Bewegung des Gegenstandes ebenfalls zum Stillstand gebracht werden.

Die Verifikationseinrichtung kann für mindestens einen Teil der Positions-Messwertgeber auch eine stationäre Einrichtung umfassen, an welcher der am Halterungsgestell befestigte Gegenstand zumindest ein Mal vorbeigeführt wird, wo dessen Position unabhängig bestimmt wird. In diesem Falle arbeitet die Verifikationseinrichtung nicht kontinuierlich sondern nur in Zeitabständen, immer dann, wenn ein Halterungsgestell mit einem daran befestigten Gegenstand an ihr vorbeigeführt wird. Dies reicht jedoch im Allgemeinen aus, um einen Fehler an einem Positions-Messwertgeber rechtzeitig zu entdecken.

Die genannte stationäre Einrichtung kann beispielsweise eine Lichtschranke umfassen, die in einer bestimmten Position des zu behandelnden Gegenstandes unterbrochen oder freigegeben wird, oder einen Ultraschallsensor oder einen auf Metall ansprechenden Sensor oder ein lineares Scansystem oder dergleichen.

Besonders zweckmäßig ist es, wenn die Breite des Kollisionsschutzbereiches eine Funktion der Geschwindigkeit des Gegenstandes ist. Auf diese Weise wird berücksichtigt, dass der Weg, den der zu behandelnde Gegenstand zwischen dem Entdecken eines möglicherweise zu einer Kollision führenden Fehlers und dem Abstoppen der Bewegung mit der Geschwindigkeit des Gegenstandes wächst.

In diesem Falle sollte möglichst ein Karosserietyp-Erkennungssystem vorgesehen sein, welches den Typ der gerade behandelten Fahrzeugkarosserie automatisch erkennt.
Dieses kann beispielsweise mehrere Lichtschranken umfassen, an denen die Fahrzeugkarosserie in einer horizontalen und einer vertikalen Bewegung vorbeibewegt wird, oder ein Bild- oder Codeerkennungssystem.

Ein Ausführungsbeispiel der Erfindung wird nachfolgend anhand der Zeichnung näher erläutert; es zeigen
- Figur 1: in einer Seitenansicht eine kataphoretische Tauchlackieranlage für Fahrzeugkarosserien;
- Figur 2: perspektivisch einen Transportwagen, wie er in der Tauchlackieranlage der Figur 1 eingesetzt wird, mit einer Fahrzeugkarosserie beim Eintauchvorgang in ein Tauchbecken;
- Figur 3: schematisch in der Seitenansicht einen Ausschnitt aus der Tauchlackieranlage der Figur 1, eingerichtet zur Kollisionsvermeidung, wobei die an dem Transportwagen befestigte Fahrzeugkarosserie keiner Kollisionsgefahr unterliegt;
- Figur 4: eine Ansicht ähnlich der Figur 3, in welcher jedoch die von dem Transportwagen mitgeführte Fahrzeugkarosserie einer Kollisionsgefahr unterliegt.

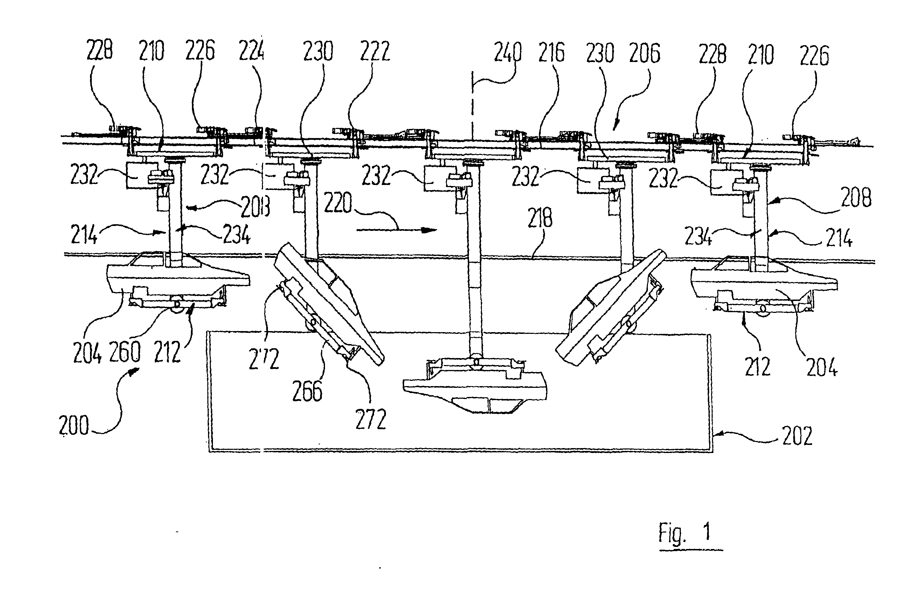

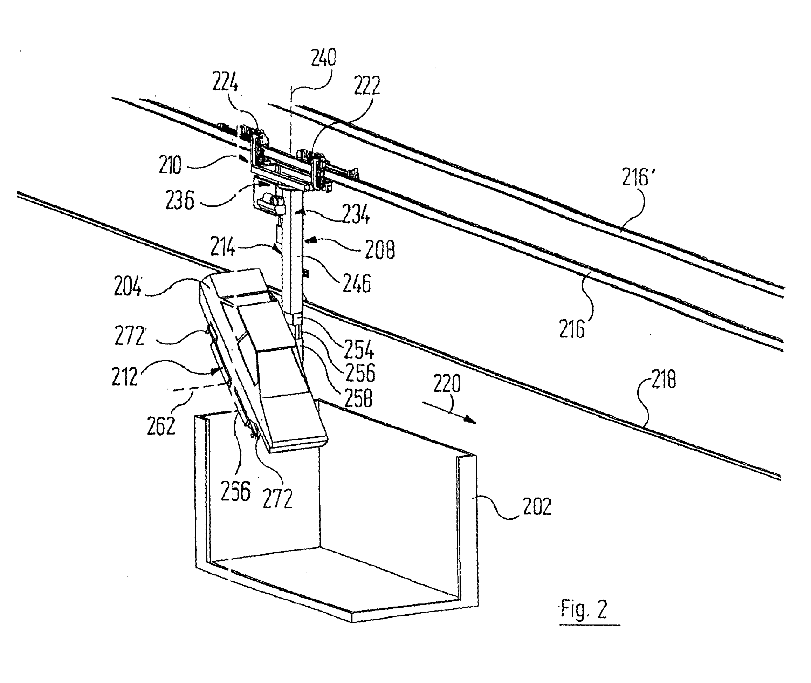

Zunächst wird auf die Figuren 1 und 2 Bezug genommen. Die darin dargestellte und insgesamt mit dem Bezugszeichen 200 gekennzeichnete kataphoretische Tauchlackieranlage stellt nur ein Ausführungsbeispiel für eine Tauchlackieranlage dar, bei welcher das erfindungsgemäße Kollisions-Vermeidungssystem eingesetzt wird. Sie umfasst ein mit flüssigem Lack gefülltes Tauchbecken 202. Farbpartikel wandern in einem elektrischen Feld, das sich zwischen Fahrzeugkarosserien 204 und Anoden ausbildet, die entlang des Bewegungsweges der Fahrzeugkarosserien 204 angeordnet und aus Übersichtlichkeitsgründen nicht dargestellt sind, auf die Fahrzeugkarosserien 204 zu und werden an diesen abgeschieden.

Die Fahrzeugkarosserien 204 werden mit Hilfe eines Fördersystems 206 durch die Anlage und insbesondere durch das Tauchbecken 202 und den darin befindlichen Lack geführt. Es umfasst eine Vielzahl von Transportwagen 208, die ihrerseits einen Antriebswagen 210 und ein Haltegestell 212 aufweisen, welche über eine weiter unten im Detail erläuterte Teleskopeinrichtung 214 miteinander gekoppelt sind.

Über dem Tauchbecken 202 erstreckt sich eine Antriebsschiene 216, wie sie bei herkömmlichen Elektrohängebahnen eingesetzt wird. Die Bewegungsrichtung, in welcher die Fahrzeugkarossen 204 mittels des Fördersystems 206 gefördert werden, ist in Figur 1 durch einen Pfeil 220 dargestellt. Die Antriebsschiene 216 ist bezogen auf die Mitte des Tauchbeckens 202 in Richtung senkrecht zur Zeichenebene der Figur 1 nach außen versetzt.

Bei den Antriebswagen 210 handelt es sich um eine Konstruktion, die grundsätzlich von Elektrohängebahnen bekannt ist. Jeder dieser Antriebswagen 210 besitzt ein in Bewegungsrichtung 220 vorauseilendes Fahrwerk 222, in der Fachsprache "Vorläufer" genannt, sowie ein in Bewegungsrichtung 220 nacheilendes weiteres Fahrwerk 224, welches in der Fachsprache "Nachläufer" genannt wird. Vorläufer 222 und Nachläufer 224 sind in bekannter Weise mit Führungs- und Tragrollen ausgestattet, die hier nicht eigens mit einem Bezugszeichen versehen sind und an verschiedenen Flächen des I-förmigen Profils der Antriebsschiene 116 abrollen. Mindestens eine der Rollen des Vorläufers 222 bzw. des Nachläufers 224 dient als Antriebsrolle und ist hierzu durch einen Elektromotor 226 bzw. 228 drehbar.

Vorläufer 222 und Nachläufer 224 jedes Antriebswagens 210 sind durch einen Verbindungsrahmen 230 miteinander verbunden. Dieser trägt, wiederum in bekannter Weise, eine Steuereinrichtung 232, welche mit der zentralen Steuerung der Tauchlackieranlage 200 und gegebenenfalls mit den Steuereinrichtungen 232 weiterer in der Tauchlackieranlage 200 vorhandener Antriebswagen 210 kommunizieren kann. Auf diese Weise ist eine weitgehend unabhängige Bewegung der verschiedenen Transportwagen 208 und der daran angebrachten beweglichen Teile möglich.

Die Teleskopeinrichtung 214, welche den Antriebswagen 210 mit dem Haltegestell 212 koppelt, umfasst einen dreigliedrigen vertikal verlaufenden Teleskoparm 234, welcher in seiner Länge veränderbar ist. Er umfasst ein oberes Teleskopglied 246, ein mittleres Teleskopglied 254 sowie ein unteres Teleskopglied 256, die relativ zueinander verschiebbar sind. Die herfür erforderlichen, von der Steuerungseinrichtung 232 kontrollierten Motoren sind nicht dargestellt.

Am unteren freien Endbereich 258 des unteren Teleskopgliedes 256 ist ein Drehzapfen 260 gelagert. Dieser definiert eine in Figur 2 gezeigte horizontale Drehachse 262. Der Drehzapfen 260 kann über einen von dem Teleskopglied 256 mitgeführten, in der Zeichnung nicht erkennbaren Getriebemotor 264, welcher von der Steuereinrichtung 232 des Transportwagens 208 angesteuert wird, in beiden Drehrichtungen um die Drehachse 262 verdreht werden.

Das Haltegestell 212 umfasst in bekannter Weise zwei parallel zu einander verlaufende Längsholme 266, von denen in den Figuren 1 und 2 jeweils nur der dem Betrachter zugewandte erkennbar ist. Diese sind mittig über eine Quertraverse 270 miteinander verbunden. Der Drehzapfen 260 ist drehfest mit der Außenfläche eines Längsholms 266 des Halterungsgestells 212 verbunden. An den Enden der Längsholme 266 und 268 sind Befestigungsmittel 272 angebracht, mit welchen die zu lackierende Fahrzeugkarosserie 204 in an und für sich bekannter Weise an dem Halterahmen 212 lösbar befestigt werden kann.

Das Halterungsgestell 212 wird somit über den Drehzapfen 260 nur an einer Seite getragen, so dass keine Komponente des Fördersystems 206 in dem Raum senkrecht oberhalb des Haltegestelles 212 angeordnet ist. Die Gefahr einer Verunreinigung der Fahrzeugkarosserie 204 durch von Komponenten des Fördersystems 206 herabfallenden Schmutz, wie z. B. Staub, Öl oder dgl., ist somit reduziert.

Wie oben erwähnt, können die Teleskopglieder 246, 254 und 256 des Teleskoparmes 234 relativ zueinander bewegt werden. Dazu sind die Querschnitte der einzelnen Teleskopglieder 246, 254 und 256 derart komplementär zueinander ausgebildet, dass das mittlere Teleskopglied 254 in dem oberen Teleskopglied 246 und das untere Teleskopglied 256 in dem mittleren Teleskopglied 254 geführt verschoben werden kann.

Die "normale" Funktionsweise der oben beschriebenen kataphoretischen Tauchlackieranlage 200 im ungestörten Lackierbetrieb ist folgende:
Die zu lackierenden Fahrzeugkarosserien 204 werden in Figur 1 in im Wesentlichen horizontaler Ausrichtung von einer Vorbehandlungsstation aus zugeführt, in welcher sie in bekannter Weise durch Reinigen, Entfetten usw. auf den Lackiervorgang vorbereitet werden. Die Teleskopglieder 246, 254 und 256 sind dabei ineinander gefahren, so dass der Teleskoparm 234 seine geringstmögliche Länge aufweist. Der Antriebswagen 210 des entsprechenden Transportwagens 208 wird mit Hilfe der Elektromotoren 226 und 228 entlang der Antriebsschiene 216 auf das Tauchbecken 202 zugeführt, wobei das zugehörige Halterungsgestell 212 mit der hieran befestigten Fahrzeugkarosserie 204 über die Teleskopeinrichtung 214 mitgeführt wird.

Wenn sich der Transportwagen 208 der auf der Eintrittsseite befindlichen Stirnwand des Tauchbeckens 202 nähert, wird die Fahrzeugkarosserie 204 progressiv abgesenkt, indem der Teleskoparm 234 ausgefahren wird. Sobald die Front der Fahrzeugkarosserie 204 über die Stirnwand des Tauchbeckens 202 hinaus ins Innere des Tauchbeckens 202 ragt, wird mit Hilfe des oben erwähnten Getriebemotors der Drehzapfen 260 und damit das Halterungsgestell 212 mit der daran befestigten Fahrzeugkarosserie 204 um die Drehachse 262 verdreht. In dieser Phase ist also die Gesamtbewegung der Fahrzeugkarosserie 204 als Überlagerung dreier Bewegungen zu verstehen, nämlich einer horizontalen Linearbewegung (Pfeil 220) entlang der Antriebsschiene 216, einer vertikalen Linearbewegung entsprechend der Längsachse des Teleskoparmes 234 und einer Drehbewegung um die Drehachse 262 des Drehzapfens 260. Dabei "wickelt" sich die Fahrzeugkarosserie 204 über die eingangsseitige Stirnwand des Tauchbeckens 202. Die entsprechende Position ist perspektivisch in Figur 2 dargestellt.

Unter fortgesetztem Absenken und fortgesetzter Drehung der Fahrzeugkarosserie 204 um die Drehachse 262 des Drehzapfens 260 wird schließlich eine Position erreicht, in welcher die Fahrzeugkarosserie 204 im Wesentlichen senkrecht steht. Dabei befindet sich die Fahrzeugkarosserie 204 noch verhältnismäßig nahe an der eingangsseitigen Stirnwand des Tauchbeckens 202. In dem Ausmaß, in dem sich der Transportwagen 208 weiterbewegt und damit der Abstand zwischen der Mitte der Fahrzeugkarosserie 204 und der eingangsseitigen Stirnwand des Tauchbeckens 202 wächst, wird der Drehzapfen 260 und damit die Fahrzeugkarosserie 204 weiter im Uhrzeigersinn verdreht, so dass sich die Fahrzeugkarosserie 204 auf den Rücken zu legen beginnt. Spätestens in dem Moment, in dem die Fahrzeugkarosserie 204 vollständig "auf dem Rücken" und damit wieder horizontal liegt, ist die Fahrzeugkarosserie 204 vollständig in den flüssigen Lack eingetaucht.

Die Fahrzeugkarosserie 204 wird zunächst in dieser Position mit Hilfe des Transportwagens 208 weiter durch das Tauchbecken 202 gefördert, bis sie näher an die ausgangsseitige Stirnwand des Tauchbeckens 202 herangerückt ist.

Sodann beginnt der Austauchvorgang der Fahrzeugkarosserie 204. Diese stellt sich wiederum als Überlagerung von drei Bewegungen dar, nämlich der horizontalen Linearbewegung in Förderrichtung 220, der Vertikalbewegung entlang der Längsachse des Teleskoparmes 234 und der Drehbewegung um die Drehachse 262 des Drehzapfens 260. Dabei "wickelt" sich die Fahrzeugkarosserie 204 unter Verkürzung des Teleskoparmes 234 und damit unter einer Aufwärtsbewegung des Halterungsgestells 212 und Fortsetzung der Drehbewegung über die ausgangsseitige Stirnwand des Tauchbeckens 202 weg, bis dann in Förderrichtung 220 hinter dem Tauchbecken 202 erneut eine horizontale Position der frisch lackierten Fahrzeugkarosserie 204 erreicht ist.

Die geschilderten Bewegungsvorgänge finden unter dem Einfluss eines Programmes statt, welches in der von den verschiedenen Transportwagen 208 mitgeführten Steuereinrichtung 232 abgespeichert ist, ggfs. unter Mitwirkung der übergeordneten zentralen Steuerung der Tauchlackieranlage 200.

Wie in allen technischen Einrichtungen können auch bei der oben beschriebenen Tauchlackieranlage 200 Fehler auftreten. Diese können ohne die nachfolgend beschriebenen zusätzlichen Maßnahmen zu Kollisionen zwischen den zu lackierenden Fahrzeugkarosserien 204 und harten Strukturen, insbesondere den Wänden der Tauchbecken 202, führen. Die genannten Fehler können Fehler des Bedienungspersonals sein, beispielsweise eine falsch gewählte Tauchkurve für die jeweils bearbeitete Fahrzeugkarosserie, oder Fehler in der durchgeführten Programmierung der Steuereinrichtungen 232. Fehler können auch bei sog. "Handfahrten" auftreten, bei denen einzelne Transportwagen 208 mit angehängter Fahrzeugkarosserie 204 unter "Handkommandos", also ohne Rückgriff auf die in der Steuereinrichtung 232 einprogrammierte Tauchkurve, bewegt werden. Schließlich können in den verschiedenen eingesetzten Programmen der Steuereinrichtungen 232 auch unerkannte Fehler vorhanden sein, die sich in einem nicht vorhersehbaren Zeitpunkt unter bestimmten Umständen auswirken und die korrekte Führung der Fahrzeugkarosserien 204 durch die Tauchlackieranlage 200 beeinträchtigen können.

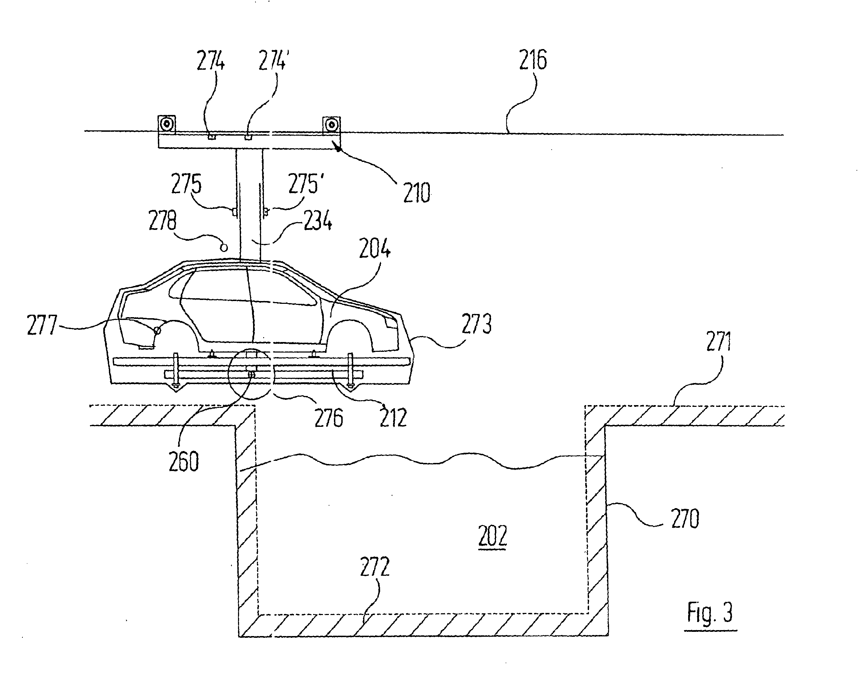

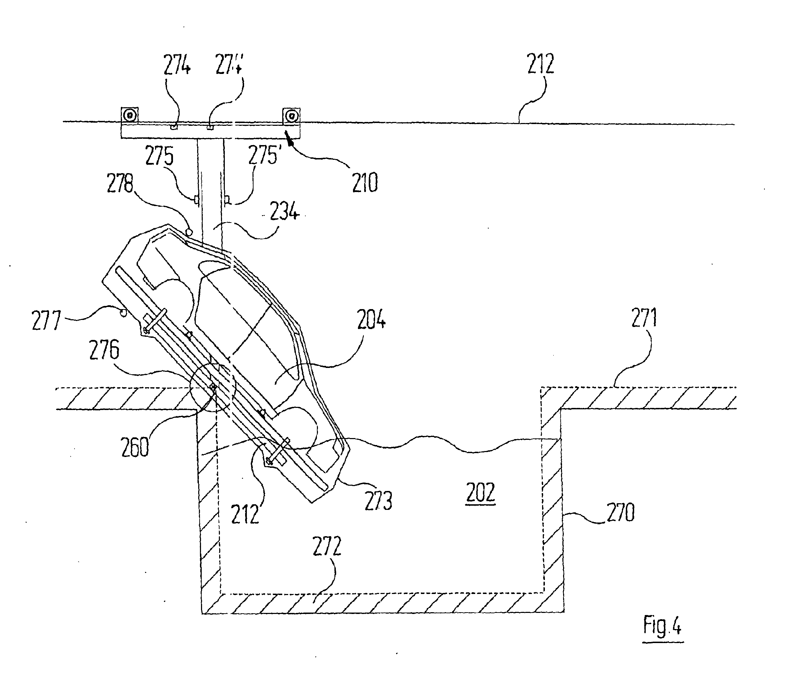

Aus diesem Grunde ist die oben anhand der Figuren 1 und 2 beschriebene Tauchlackieranlage 200 zusätzlich mit einem Kollisions-Vermeidungssystem versehen, das nachfolgend anhand der Figuren 3 und 4 erläutert wird.

Dieses Kollisions-Vermeidungssystem setzt sich aus einem "Software-Anteil" und einem "Hardware-Anteil" zusammen.

Der "Software-Anteil" beinhaltet ein in den Steuereinrichtungen 232 der verschiedenen Tauchwagen 208 eingespeichertes Kollisions-Vermeidungsprogramm, welches in nachfolgend beschriebener Weise das "normale", in den ungestörten Bewegungsablauf der Fahrzeugkarosserie 204 beherrschende Programm eingreift, um drohende Kollisionen zu vermeiden.

Hierzu sind in den verschiedenen Steuereinrichtungen 232 die geometrischen Verhältnisse sowohl der "harten", stationären Strukturen der Tauchlackieranlage 200 als auch diejenigen der zu behandelnden Fahrzeugkarosserie 204 einprogrammiert. Unter "harten" Strukturen werden insbesondere die Wände der verschiedenen Tauchbecken 202 aber auch Strukturen, welche den Tauchbecken 202 vor- oder nachgeschaltet sind oder zwei Tauchbecken 202 miteinander verbinden, verstanden. Auch Behandlungseinrichtungen, z.B. Sprühkränze, zwischen zwei Tauchbecken zählen hierzu. Deren Position kann vom Typ der gerade behandelten Fahrzeugkarosserie 204 abhängen.

Die Geometrie der harten Strukturen ist natürlich ebenso wie diejenige der Fahrzeugkarosserie 204 von Haus aus dreidimensional. Da jedoch durch die Antriebsschiene 216 eine zuverlässige seitliche Führung der Fahrzeugkarosserien 204 gewährleistet ist, kann das Problem der Kollisionsvermeidung auf eine zweidimensionale Betrachtung in einer vertikalen, die Fahrtrichtung 220 enthaltenden Ebene reduziert werden, wie sie etwa in den Figuren 1, 3 und 4 dargestellt ist. In dieser zweidimensionalen Betrachtung werden aus Flächen Linien.

Die Begrenzungslinie der harten Strukturen ist in den Figuren 3 und 4 mit dem Bezugszeichen 270 gekennzeichnet. Sie ist, wie erwähnt, in den verschiedenen Steuereinrichtungen 232 eingespeichert. Da sie, wie oben schon erwähnt, von dem Typ der behandelten Fahrzeugkarosserie 204 abhängig sein kann, ist dem dargestellten Anlagenabschnitt eine automatisch arbeitende Karosserietyp-Erkennungseinrichtung vorgeschaltet. Nach deren Ergebnis wird die jeweils eingesetzte Begrenzungslinie 270 gewählt.

Ebenso eingespeichert ist eine parallel zur Grenzlinie der harten Strukturen 270 verlaufende, dem Bewegungsweg der Fahrzeugkarosserie 204 zugewandte Grenzlinie 271 eines Kollisionsschutzbereiches 272, der zwischen dieser Grenzlinie 271 und der Grenzlinie 270 der harten Strukturen liegt.

Die Breite des Kollisionsschutzbereiches 272 und damit der Abstand zwischen den Grenzlinien 271 und 270 kann fest oder ggfs. auch dynamisch sein. Im letzteren Falle wächst die Breite des Kollisionsschutzbereiches 272 mit der Bewegungsgeschwindigkeit der Fahrzeugkarosserie 204.
Die Lage der Grenzlinie 271 wird dann von den Steuereinrichtungen 232 aus der diesen bekannten Lage der Grenzlinie 270 der harten Strukturen und der den Steuereinrichtungen 232 ohnehin bekannten Geschwindigkeit der Bewegung der Fahrzeugkarosserien 204 errechnet werden. Unter "Bewegungsgeschwindigkeit" der Fahrzeugkarosserie 204 kann im einfachsten Falle die Geschwindigkeitskomponente in Horizontalrichtung verstanden werden; am sichersten ist es, hier die höchste Geschwindigkeit zu berücksichtigen, die ein Punkt der Fahrzeugkarosserie 204 bei der aus drei Bewegungsarten überlagerten Gesamtbewegung erreicht.

In den Steuereinrichtungen 232 ist außerdem die Geometrie der an den Halterungsgestellen 212 befestigten Fahrzeugkarosserien 204 abgespeichert. Diese Geometrie kann, wie in den Figuren 3 und 4 angedeutet, bei der hier angestellten zweidimensionalen Betrachtung durch einen die Fahrzeugkarosserie 204 und das Halterungsgestell 212 umgebenden Polygonzug 273 oder eine andere mathematisch definierte Hüllkurve angenähert werden.

Die "Hardware-Komponente" des Kollisions-Vermeidungssystemes umfasst für jeden linearen Bewegungsfreiheitsgrad des Fördersystemes 206 an jedem Transportwagen 208 zwei absolut messende Positions-Messwertgeber 274, 274', 275, 275':
Die Positions-Messwertgeber für Linearbewegung des Transportwagens 208 entlang der Antriebsschiene 216 in Richtung des Pfeiles 220 können beispielsweise mit einem Codestreifen zusammenarbeiten, der sich entlang der Antriebsschiene 216 erstreckt und dessen Codes jeweils den Ort angeben, an dem sie sich befinden. Diese Codes werden jeweils von zwei Leseköpfen 274, 274' abgelesen, die von dem Transportwagen 208 mitgeführt werden. Die Leseköpfe 274, 274' sind in den Figuren 3 und 4 nur sehr schematisch angedeutet.

Auf einem ähnlichen Prinzip beruhende Positionsgeber mit Leseköpfen 275, 275' sind an dem Teleskoparm 234 zur Erfassung der linearen Vertikalbewegung vorgesehen. Die in den Figuren 3 und 4 dargestellte Position dieser Leseköpfe 275, 275' ist nur symbolisch zu versehen: Sie werden bei der praktischen Ausführung von außen nicht sichtbar innerhalb des Teleskoparmes 234 angeordnet sein.

Der Drehfreiheitsgrad des Haltegestelles 212 um die Drehachse 260 schließlich wird von einem Drehwinkelgeber 276 überwacht, der an dem Halterungsgestell 212 befestigt ist. Grundsätzlich könnte diesem Drehwinkelgeber 276 ein zweiter, identisch aufgebauter Drehwinkelgeber zugeordnet sein. Im vorliegenden Falle sind statt eines solchen zweiten Drehwinkelgebers jedoch zwei stationäre Lichtschranken 277, 278 vorgesehen, die so positioniert sind, dass sie beide in einer bestimmten Position der Fahrzeugkarosserie 204 nicht unterbrochen werden.

Zum Betrieb des Kollisions-Vermeidungssystemes sind an und für sich nur die Leseköpfe 274, 275 und der Drehwinkelgeber 276 erforderlich. Die weiteren Leseköpfe 274', 275' und die Lichtschranken 277, 278 sind redundant und dienen der Erhöhung der Sicherheit.

Das beschriebene Kollisions-Vermeidungssystem arbeitet im Hintergrund des normalen Programmablaufes in den Steuerungseinrichtungen 232 bzw. im Handbetrieb im Hintergrund der von der Bedienungsperson gegebenen Bedienkommandos wie folgt:
Den Steuereinrichtungen 232 der verschiedenen Tragwagen 208 werden von den diesen zugeordneten Leseköpfen 274 jeweils Informationen über die momentane Position der Tragwagen 208 auf der Antriebsschiene 216 übermittelt sowie von den Leseköpfen 275 über die Länge des jeweiligen Teleskoparmes 234 und damit die Höhe der jeweilig zugeordneten Drehachse 260. Der Drehwinkelgeber 276 übermittelt seinerseits eine Information über die Winkelstellung, welche das Halterungsgestell 212 mit der Fahrzeugkarosserie 204 um die Drehachse 260 einnimmt. Aus diesen Informationen sowie aus der in den Steuereinrichtungen 232 abgespeicherten Information über die Grenzlinie 271 des Kollisionsschutzbereiches 272 und die idealisierte Kontur 273 der an dem Halterungsgestell 212 befestigten Fahrzeugkarosserie 204 errechnen die Steuereinrichtungen 232 nunmehr, ob die idealisierte Kontur 273 außerhalb des Kollisionsschutzbereiches 272 liegt, wie dies in Figur 3 dargestellt ist, oder in den Kollisionsschutzbereich 272 eindringt, wie dies in Figur 4 gezeigt ist. Im letzteren Falle gibt die Steuereinrichtung 232 einen Alarm ab und bringt die Weiterbewegung der Fahrzeugkarosserie 204 unter Überspielen des normalen Programmes sofort zum Halt. Auf diese Weise wird die drohende Kollision zwischen der Fahrzeugkarosserie 204 und der durch die Grenzlinie 270 symbolisierten harten Struktur vermieden.

Die geschilderten Informationsübermittlungen von den verschiedenen absolut messenden Positionsgebern 274, 275 und 276 sowie die hieran sich anschließenden Berechnungen können in bestimmten kurzen Zeitabständen im Wesentlichen in Echtzeit durchgeführt werden.

Um zu verhindern, dass das Kollisions-Vermeidungssystem bei Ausfall eines Positionsgebers 274, 275 oder 276 funktionsunfähig wird, sind die redundanten Leseköpfe 274', 275' und die Lichtschranken 277, 278 vorgesehen. Die von den Lesekopf-Paaren 274, 274', 275, 275' abgegebenen Informationen können gleichzeitig abgerufen und miteinander verglichen werden; weichen sie um mehr als ein vorgegebenes Toleranzfenster voneinander ab, wird ebenfalls Alarm gegeben und die Weiterbewegung der Fahrzeugkarosserie 204 gestoppt. Die Funktionsweise des Drehwinkelgebers 276 wird dadurch überwacht, dass die Durchgängigkeit der Lichtschranke 277, 278 zu einem Zeitpunkt geprüft wird, an welchem die absolut messenden Positionsgeber 274, 275 und 276 eine Stellung der Fahrzeugkarosserie 204 signalisieren, bei welcher die Durchgängigkeit dieser Lichtschranken 277, 278 vorhanden sein muss. Ist eine dieser Lichtschranken 277, 278 zu diesem Zeitpunkt jedoch unterbrochen, so bedeutet dies, dass einer der absolut messenden Positionsgebern 274, 275 oder 276 nicht in Ordnung ist. Auch in diesem Falle wird Alarm ausgelöst und die Weiterbewegung der Fahrzeugkarosserie 204 sofort gestoppt.

Das oben geschilderte Kollisions-Vermeidungssystem lässt sich vorteilhaft nicht nur bei dem konkret beschriebenen Fördersystem 206 sondern überall dort einsetzen, wo Gegenstände, insbesondere Fahrzeugkarosserien, unter Überlagerung mindestens einer Linearbewegung und mindestens einer Dreh- oder Schwenkbewegung in ein Tauchbekken eingebracht und aus diesem wieder herausgebracht werden sollen.

## Patentansprüche

1. Anlage zur Tauchbehandlung, insbesondere Tauchlackierung, von Gegenständen, insbesondere von Fahrzeugkarosserien, mit
a) mindestens einem Tauchbecken (202), das bis zu einem bestimmten Spiegel mit Behandlungsflüssigkeit füllbar ist;
b) einem Fördersystem (206), mit dessen Hilfe die zu behandelnden Gegenstände (204) an das Tauchbecken (202) heran, in dieses hinein, aus diesem heraus und von diesem weg beförderbar sind und das eine Führungseinrichtung (216) sowie mindestens einen entlang der Führungseinrichtung (216) verfahrbaren Transportwagen (208) aufweist, der seinerseits umfasst:
ba) einen Antriebsmotor (226, 228) für die Verfahrbewegung entlang der Führungseinrichtun (216);
bb) ein Halterungsgestell (212), an dem mindestens ein Gegenstand (204) befestigbar ist;
bc) eine mindestens eine Dreh- oder Schwenkachse (262) aufweisende Eintaucheinrichtung, an welcher das Halterungsgestell (212) befestigt ist;
c) eine Steuerungseinrichtung (232), in welcher eine Soll-Eintauchkurve des am Halterungsgestell (212) befestigten Gegenstandes (204) eingespeichert ist und die Bewegung des am Halterungsgestell (212) befestigten Gegenstandes (204) steuert;
**dadurch gekennzeichnet, dass**
d) ein Kollisionsvermeidungssystem vorgesehen ist, welches umfasst:
da) Für jeden möglichen Freiheitsgrad der Bewegung des am Halterungsgestell (212) befestigten Gegenstands (204) einen den Absolutwert messenden Positions-Messwertgeber (274, 275, 276) ;
db) einen Speicher, in dem der Verlauf einer ersten Grenzfläche oder Grenzlinie (270) gespeichert ist, welche den Verlauf der harten Strukturen entlang des Bewegungsweges des Gegenstandes (204) wiedergibt;
dc) einen Speicher, in dem der Verlauf einer zweiten Grenzfläche oder Grenzlinie (271) gespeichert ist, die in Abstand von der ersten Grenzfläche oder Grenzlinie (270) verläuft, wobei zwischen der ersten Grenzfläche oder Grenzlinie (270) und der zweiten Grenzfläche oder Grenzlinie (271) ein Kollisionsschutzbereich (272) gebildet ist;
dd) einen Speicher, in welchem der Verlauf einer Kontur (273) gespeichert ist, welche den Verlauf der Kontur des an dem Halterungsgestell (212) befestigten Gegenstandes (204) repräsentiert;
wobei
e) die Steuerungseinrichtung (232) aus den ihr von den Positions-Messwertgebern (274, 275, 276) gelieferten Signalen und den gespeicherten Daten über den Verlauf der zweiten Grenzfläche oder Grenzlinie (271) sowie über die den am Halterungsgestell (212) befestigten Gegenstand (204) repräsentierende Kontur (273) kontinuierlich oder in bestimmten Zeitabständen errechnet, ob die Kontur (273) in den Kollisionsschutzbereich (272) eindringt oder nicht und im ersten Falle die weitere Bewegung des Gegenstandes (204) anhält.

2. Anlage nach Anspruch 1, **dadurch gekennzeichnet, dass** die Steuerungseinrichtung (232) von dem Transportwagen (208) mitgeführt ist.

3. Anlage nach Anspruch 1 oder 2, **dadurch gekennzeichnet, dass** eine Verifikationseinrichtung (274', 275', 277, 278) vorgesehen ist, welche die korrekte Funktion der Positions-Messwertgeber (274, 275, 276) verifiziert.

4. Anlage nach Anspruch 3, **dadurch gekennzeichnet, dass** die Verifikationseinrichtung (274', 275', 277, 278) für mindestens einen Teil der Positions-Messwertgeber (274, 275) einen redundanten ähnlichen Positions-Messwertgeber (274', 275') umfasst.

5. Anlage nach Anspruch 3 oder 4, **dadurch gekennzeichnet, dass** die Verifikationseinrichtung (274', 275', 277, 278) für mindestens einen Teil der Positions-Messwertgeber (276) eine stationäre Einrichtung (277, 278) umfasst, an welcher der am Halterungsgestell (212) befestigte Gegenstand (204) zumindest ein Mal vorbeigeführt wird, wo dessen Position unabhängig bestimmt.

6. Anlage nach Anspruch 5, **dadurch gekennzeichnet, dass** die stationäre Einrichtung mindestens eine Lichtschranke (277, 278) umfasst.

7. Anlage nach einem der vorhergehenden Ansprüche, **dadurch gekennzeichnet, dass** die Breite des Kollisionsschutzbereichs (272) eine Funktion der Geschwindigkeit des Gegenstandes (204) ist.

8. Anlage nach einem der vorhergehenden Annspprüche, **dadurch gekennzeichnet, dass** eine automatisch arbeitene Karosserietyp-Erkennungseinrichtung vorgesehen ist.

## Claims

1. A line for dip coating, in particular dip painting, objects, in particular vehicle bodies, having
a) at least one dip tank (202), which may be filled to a certain level with coating fluid;
b) a conveyor system (206), with the aid of which the objects to be coated (204) may be conveyed towards the dip tank (202), into the dip tank, out of the dip tank and away from the dip tank, and which has a guide device (216) and at least one transport carriage (208) which may be moved along the guide device (216) and which in turn comprises:
ba) a drive motor (226, 228) for the movement along the guide device (216);
bb) a holding frame (212) to which at least one object (204) may be fixed;
bc) an immersion device which has at least one rotational or pivot axis (262) and to which the holding frame (212) is fixed;
c) a control device (232) in which a set immersion curve of the object (204) fixed to the holding frame (212) is stored and controls the movement of the object (204) fixed to the holding frame (212);
**characterised in that**
d) a collision prevention system is provided, which comprises:
da) a position transducer (274, 275, 276) measuring the absolute value for each possible degree of freedom of movement of the object (204) fixed to the holding frame (212) ;
db) a memory in which the course of a first boundary surface or boundary line (270) is stored, which reproduces the course of the hard structures along the movement path of the object (204);
dc) a memory in which the course of a second boundary surface or boundary line (271) is stored, which runs at a distance from the first boundary surface or boundary line (270), wherein an anti-collision area (272) is formed between the first boundary surface or boundary line (270) and the second boundary surface or boundary line (271);
dd) a memory in which the course of a contour (273) is stored, which represents the course of the contour of the object (204) fixed to the holding frame (212);
wherein
e) the control device (232), from the signals delivered to it by the position transducers (274, 275, 276) and the stored data relating to the course of the second boundary surface or boundary line (271) and relating to the contour (273) representing the object (204) fixed to the holding frame (212), calculates continuously, or at particular time intervals, whether the contour (273) penetrates the anti-collision area (272) or not and, in the first case, stops the further movement of the object (204).

2. A line according to Claim 1, **characterised in that** the control device (232) is carried along by the transport carriage (208).

3. A line according to Claim 1 or 2, **characterised in that** a verification device (274', 275', 277, 278) is provided, which verifies the correct function of the position transducers (274, 275, 276).

4. A line according to Claim 3, **characterised in that** the verification device (274', 275' 277, 278) for at least some of the position transducers (274, 275) comprises a redundant similar position transducer (274', 275').

5. A line according to Claim 3 or 4, **characterised in that** the verification device (274', 275', 277, 278) for at least some of the position transducers (276) comprises a stationary device (277, 278) past which the object (204) fixed to the holding frame (212) is guided at least once, where its position is determined independently.

6. A line according to Claim 5, **characterised in that** the stationary device comprises at least one light barrier (277, 278).

7. A line according to one of the preceding claims, **characterised in that** the width of the anti-collision area (272) is a function of the speed of the object (204).

8. A line according to one of the preceding claims, **characterised in that** an automatically-operating body-type recognition device is provided.

## Revendications

1. Installation de traitement par immersion, en particulier de peinture par immersion, d'objets, en particulier de carrosseries de véhicules, avec
a) au moins un bac d'immersion (202), qui peut être rempli de liquide de traitement jusqu'à un niveau déterminé ;
b) un système de transport (206), à l'aide duquel les objets (204) à traiter peuvent être approchés du bac d'immersion (202), introduits dans ce dernier, évacués de ce dernier et éloignés de ce dernier, et qui présente un dispositif de guidage (216) ainsi qu'au moins un chariot de transport (208) pouvant être déplacé le long du dispositif de guidage (216), chariot qui comprend lui-même :
ba) un moteur d'entraînement (226, 228) pour le mouvement de déplacement le long du dispositif de guidage (216) ;
bb) un bâti de support (212), sur lequel peut être fixé au moins un objet (204) ;
bc) un dispositif d'immersion, présentant au moins un axe de rotation ou de pivotement (262) et auquel est fixé le bâti de support (212) ;
c) un dispositif de commande (232), dans lequel est enregistrée une courbe d'immersion de consigne de l'objet (204) fixé sur le bâti de support (212) et qui commande le mouvement de l'objet (204) fixé sur le bâti de support (212) ;
**caractérisée en ce que**
d) il est prévu un système de prévention des collisions, qui comprend :
da) pour chaque degré de liberté possible du déplacement de l'objet (204) fixé sur le bâti de support (212), un capteur de mesure de position (274, 275, 276) mesurant la valeur absolue ;
db) une mémoire dans laquelle est enregistré le tracé d'une première surface limite ou ligne limite (270) reproduisant le tracé des structures dures le long de la voie de déplacement de l'objet (204) ;
dc) une mémoire dans laquelle est enregistré le tracé d'une deuxième surface limite ou ligne limite (271) qui court à distance de la première surface limite ou ligne limite (270), sachant qu'une zone (272) de protection première surface limite ou ligne limite (270) contre les collisions est formée entre la première surface limite ou ligne limite (270) et la deuxième surface limite ou ligne limite (271) ;
dd) une mémoire dans laquelle est enregistré le tracé d'un contour (273) qui représente le tracé du contour de l'objet (204) fixé sur le bâti de support (212) ;
sachant
e) que le dispositif de commande (232), à partir des signaux qui lui sont fournis par les capteurs de mesure de position (274, 275, 276) et des données mémorisées sur le tracé de la deuxième surface limite ou ligne limite (271) ainsi que sur le contour (273) représentant l'objet (204) fixé sur le bâti de support (212), calcule en continu ou à intervalles de temps déterminés si le contour (273) pénètre ou non dans la zone (272) de protection contre les collisions et, dans le premier cas, stoppe la poursuite du mouvement de l'objet (204).

2. Installation selon la revendication 1, **caractérisée en ce que** le dispositif de commande (232) est embarqué par le chariot de transport (208).

3. Installation selon la revendication 1 ou 2, **caractérisée en ce qu'**il est prévu un dispositif de vérification (274', 275', 277, 278), qui vérifie le bon fonctionnement des capteurs de mesure de position (274, 275, 276).

4. Installation selon la revendication 3, **caractérisée en ce que** le dispositif de vérification (274', 275', 277, 278) comprend, pour au moins une partie des capteurs de mesure de position (274, 275), un capteur de mesure de position redondant similaire (274', 275').

5. Installation selon la revendication 3 ou 4, **caractérisée en ce que** le dispositif de vérification (274', 275', 277, 278) comprend, pour au moins une partie des capteurs de mesure de position (276), un dispositif stationnaire (277, 278) devant lequel on fait passer au moins une fois l'objet (204) fixé sur le bâti de support (212) et qui détermine de façon indépendante la position de l'objet (204).

6. Installation selon la revendication 5, **caractérisée en ce que** le dispositif stationnaire comprend au moins une barrière photoélectrique (277, 278).

7. Installation selon l'une des revendications précédentes, **caractérisée en ce que** la largeur de la zone (272) de protection contre les collisions est une fonction de la vitesse de l'objet (204).

8. Installation selon l'une des revendications précédentes, **caractérisée en ce qu'**il est prévu un dispositif de reconnaissance de type de carrosserie fonctionnant automatiquement.
